# EUROPÄISCHE PATENTSCHRIFT

(11) **EP 0 463 143 B1**
(45) Veröffentlichungstag und Bekanntmachung des Hinweises auf die Patenterteilung: **09.08.1995**
(21) Anmeldenummer: 91902409.1
(22) Anmeldetag: 22.01.1991
(51) Int. Cl.: B01J 20/28, B01D 53/04, F02M 25/08, B01D 39/14

(54) **FILTERMATERIAL FÜR KRAFTFAHRZEUGE**
FILTER MATERIAL FOR MOTOR VEHICLES
MATIERE FILTRANTE POUR VEHICULES AUTOMOBILES

(30) Priorität: 23.01.1990 DE 4001831; 09.03.1990 DE 4007536; 11.07.1990 DE 4022060
(43) Veröffentlichungstag der Anmeldung: 02.01.1992
(73) Patentinhaber: Von Blücher, Hasso, 40699 Erkrath (DE); de Ruiter, Ernest, Dr., D-51381 Leverkusen (DE)
(72) Erfinder: Von Blücher, Hasso, 40699 Erkrath (DE); de Ruiter, Ernest, Dr., D-51381 Leverkusen (DE)
(74) Vertreter: Eggert, Hans-Gunther, Dr.
(86) Internationale Anmeldenummer: EP9100111
(87) Internationale Veröffentlichungsnummer: WO9111247

(56) Entgegenhaltungen:
- DE-A- 3 813 563
- US-A- 3 683 597
- US-A- 4 028 075

## Beschreibung

Die vorliegende Erfindung betrifft Mittel und Verfahren zur Verhinderung der Kohlenwasserstoffemissionen aus Kraftfahrzeugtanks.

Mit Ottokraftstoff (Benzin) betriebene Kraftfahrzeuge sind ganz wesentliche Verursacher der Luftverschmutzung durch Kohlenwasserstoffe. Es ist bekannt, daß schlecht geregelte Motoren erhebliche Mengen unvollständig verbrannten Kraftstoffs ausstoßen. Aber auch beim Betanken werden allein in der BRD jährlich ca. 50.000 t Kohlenwasserstoffe an die Umgebung abgegeben. Das nicht vom Kraftstoff eingenommene Volumen des Tanks ist mit gasförmigen Kohlenwasserstoffen gesättigt, und diese werden beim Betanken zum Großteil nach außen gedrückt.

Grundsätzlich gibt es heute folgende Möglichkeit, diese Dämpfe am Austritt in die Atmosphäre zu hindern:
Mittels eines in die Zapfsäule integrierten Rückführsystems. Diese Lösung verlangt hohe Investitionen und ferner, daß alle Zapfhähne und Einfüllstutzen einander angepaßt sind.

Die US-A-4 028 075 offenbart einen Tankverschluß, welcher mit Adsorptionsmaterial, z.B. Aktivkohle, gefüllt ist und das Entweichen von Treibstoffdämpfen aus dem Kraftfahrzeugtank verhindern soll. Zum Betanken wird der Verschluß entfernt. Bei Betrieb des Kraftfahrzeugs saugt der Motor Außenluft durch den Verschluß, wobei die adsorbierten Treibstoffe wieder desorbiert werden.

Die US-A-3 683 597 offenbart Verfahren zur Begrenzung der dampfförmigen Treibstoffemissionen aus Kraftfahrzeugtanks gemäß den Oberbegriffen der Ansprüche 9 und 11. Die verwendeten Adsorptionsfilter bestehen aus einem Kanister, welcher mit eng gepackten Aktivkohlepartikeln zur Adsorption der Treibstoffdämpfe gefüllt ist. Bei Betrieb des Kraftfahrzeugs werden die adsorbierten Treibstoffdämpfe durch die vom Motor angesaugte Luft desorbiert und verbrannt. Die Problematik der Betankungsemissionen wird in dieser Druckschrift nicht angesprochen.

In den USA kommen derartige zylindrische Filterkanister nach Art klassischer Schüttfilter zur Anwendung. Die darin enthaltenen zwei kg Formkohle werden durch leichten Druck zusammengehalten. Die verwendete Formkohle ist jedoch nicht ausreichend abriebfest. Die dem Kraftfahrzeug eigenen Erschütterungen und Vibrationen führen zu Abrieb und damit zu Verstopfungen. Durch örtliche Verdichtung der Packung entstehen neben Kanälen Zonen hohen Widerstands, so daß eine ungleichmäßige Nutzung der Aktivkohle erfolgt und Durchbrüche unvermeidbar sind.

Da nur ein mäßiger Druckverlust hingenommen werden kann, müßten die Aktivkohleteilchen recht groß sein. Das würde lange Wege im Innern der Kohleteilchen bedingen, sowohl bei der Adsorption als auch bei der Desorption, mit der Folge einer schlechten Kinetik. Schließlich wären die ziemlich großen, starren Kanister schwer in einem PKW unterzubringen, weil heute jeder freie Raum genutzt wird und der Versuch, zusätzlichen Raum zu schaffen, oft eine gänzlich neue räumliche Anordnung bedeutet.

Der Erfindung liegt die Aufgabe zugrunde, die Adsorption der beim Betanken der Kraftfahrzeuge und bei der "Atmung" des Tanks auftretenden Kohlenwasserstoffe zu ermöglichen bzw. zu verbessern, um deren Emissionen zu vermeiden.

Die Aufgabe wird durch die in unabhängigen Ansprüchen 1, 12 und 14 beziehungsweise durch die in den kennzeichnenden Teilen der unabhängigen Ansprüche 9 und 11 angegebenen Merkmale gelöst.

Die abhängigen Ansprüche 2-8,10 und 13 betreffen bevorzugte Ausführungsformen der Erfindung.

Erfindungsgemäß geschieht dies mittels eines im Kraftfahrzeug selbst angebrachten Aktivkohlefilters, durch den die vom eingefüllten Kraftstoff verdrängten Dämpfe geleitet und adsorbiert werden, die dann beim Fahren durch vom Motor angesaugte Frischluft wieder desorbiert und im Motor verbrannt werden.

Diese Lösung ist insofern vorteilhaft, weil sie nicht nur bedeutend weniger Investitionen verlangt, stufenweise realisiert werden kann und auch die bei der normalen Temperatur-Druckschwankungen (Atmung) der Tanks entweichenden Dämpfe erfaßt.

Für die Zwecke der Erfindung wird ein Filter verwendet, das aus einem hochluftdurchlässigen im wesentlichen formstabilen dreidimensionalen Trägergerüst besteht, an dem eine Schicht von körnigen Adsorberteilchen eines Durchmessers von 0,1 bis 1 mm fixiert ist. Filter mit einem derartigen Trägergerüst und körnigen Adsorbern sind beispielsweise in der DE-A-38 13 563 beschrieben.

Unter hochluftdurchlässigen Filtern werden u.a. solche verstanden, die für eine Geschwindigkeit der durchströmenden Luft von 1 m/sec bei einer Schichtdicke des Filters von 1 cm einen Luftwiderstand unter 100 Pa, vorzugsweise zwischen 10 und 30 Pa besitzen. Unter Kraftfahrzeugen im Sinne der Erfindung werden nicht nur Autos und Lastwagen, sondern auch Motorboote und Flugzeuge verstanden, die von Ottomotoren oder Drehkolbenmotoren mit Benzin als Kraftstoff angetrieben werden.

Ein besonders geeignetes Filter besteht aus einem offenporigen, retikulierten Polyurethanschaum mit einer Porenzahl von 5 - 25 PPI, vorzugsweise 10 - 20 PPI (Poren pro Inch; 1 inch = 2,54cm), an dessen (inneren und äußeren) Wänden Aktivkohlekügelchen mit einem Durchmesser von 0,1 - 1,00 mm zum Haften gebracht sind. Die kleinen, extrem harten Kügelchen reiben nicht gegeneinander, also gibt es keinen Abrieb. Die großen Öffnungen in der Matrix garantieren einen sehr geringen Druckabfall bei sehr gleichmäßigem Durchfluß. Durch die Art des Filtermaterials sind der Formgebung keine Grenzen gesetzt: Das Filter kann als Platte, Zylinder, Quader usw. von völlig unregelmäßiger Form ausgebildet sein, kann Zuleitungen ausfüllen, kurzum: Es kann jeder verfügbare Platz genutzt werden. Die sehr große äußere Oberfläche der Kügelchen und die kurzen Wege, die das Adsorbat zurückzulegen hat, garantieren eine optimale Nutzung der Kapazität, so daß die benötigten Mengen Aktivkohle gegenüber bekannten Filtern erheblich, d.h. um etwa 50 %, reduziert werden können. Sollte es einmal nötig sein, das Filter zu erneuern, wird das ganze Filtermaterial als Stück aus der Halterung herausgenommen, ohne daß dabei irgendeine Verschmutzung auftreten kann. Der Wechsel ist nicht schwieriger als der einer Videokassette.

Ottokraftstoffe haben einen mittleren Siedebereich von 30 - 200°C und bestehen hauptsächlich aus Kohlenwasserstoffen von C₄ bis C₁₂. Um die flüchtigen Komponenten zu adsorbieren, bedarf es relativ kleiner Mikroporen. Um die höher siedenden Komponenten auch wieder desorbieren zu können, müssen die Mikroporen relativ groß sein. Hierin liegt ein Widerspruch, der mit einem einzigen Adsorptionsmaterial nicht immer befriedigend gelöst werden kann.

Um die höher und niedriger siedenden flüchtigen Komponenten des Motorenkraftstoffs optimal desorbieren zu können, werden im erfindungsgemäßen Adsorptionsfilter die Adsorbentien in einer Weise angeordnet, daß die Größe ihrer Mikroporen in Strömungsrichtung der austretenden Kohlenwasserstoffe abnimmt. Diese Verminderung des Durchmessers der an dem luftdurchlässigen Träger fixierten Adsorberkörner kann gleichmäßig oder in einer oder mehreren Stufen erfolgen. In diesem Fall besteht der Adsorptionsfilter also aus zwei oder mehreren Lagen, in denen Adsorbentien mit unterschiedlichen Bereichen der Mikroporendurchmesser angeordnet sind.

Nach einer bevorzugten Ausführungsform der Erfindung besteht das komplette Filterpaket aus mindestens zwei Sektionen, von denen die zuerst durchströmte dazu bestimmt ist, die weniger flüchtigen Komponenten abzufangen, die die feinporigen Adsorber vergiften würden. Diese erste Filterschicht, die man auch als Vorfilter bezeichnen könnte, enthält Adsorber mit großen Mikroporen. Hier wird zwar nur ein geringer Teil der flüchtigen Komponenten adsorbiert, wohl aber alle höher siedenden Bestandteile.

In der zweiten, direkt folgenden Sektion, die Adsorber mit kleinen Mikroporen enthält, werden vornehmlich die leichter flüchtigen Komponenten (wie z.B. Butane und Pentane) adsorbiert, nachdem die höher siedenden Komponenten, die aus den kleinen Mikroporen nicht mehr hätten desorbiert werden können, bereits in der ersten Sektion (große Mikroporen) abgeschieden wurden. Die Desorption mit Frischluft geschieht in umgekehrter Richtung, so daß keine Blockierung der kleinen Mikroporen durch "Hochsieder" auftreten kann. Dadurch bleibt die volle Kapazität erhalten.

Wenn der in dem erfindungsgemäßen Verfahren einzusetzende Adsorptionsfilter nur Adsorber eines Bereichs von Mikroporen enthält, dann werden Adsorber mit einem Mikroporendurchmesser im wesentlichen im Bereich von 3 - 18 Å (= 0,3 - 1,8 nm) eingesetzt. In diesem Fall besteht der Adsorptionsfilter nur aus einer Sektion mit einer Art von Adsorberkörnern.

Geeignete Adsorber sind in diesem Fall:
a) Aktivkohle mit einem Durchmesser der Mikroporen im wesentlichen im Bereich von 0,6 - 1,4 nm (6 - 14 Å).
b) Polymere Adsorber, insbesondere auf Basis von Divinylbenzol, mit einem Mikroporendurchmesser im wesentlichen im Bereich von 0,5 - 1,5 nm (5 - 15 Å).
c) Hydrophobe Molekularsiebe mit einem Porendurchmesser von 0,3 - 1,8 nm (3 - 18 Å).

Diese verschiedenen Adsorbertypen eines verhältnismäßig großen Bereichs für den Durchmesser der Mikroporen können an dem Trägermaterial in Form ihrer denkbaren Gemische fixiert sein oder der Filter kann aus quer zur Strömungsrichtung der austretenden Kohlenwasserstoffe angeordneten Schichten oder Lagen der Adsorbentien a, b oder c des im wesentlichen gleichen Bereichs der Mikroporen bestehen.

Im Fall von Adsorptionsfiltern mit in Strömungsrichtung abnehmender größe der Mikroporen der Adsorbentien können für die großporige Filterschicht, die von den austretenden Kohlenwasserstoffdämpfen zuerst durchströmt wird (Vorfilter), folgende Adsorbentien verwendet werden:
a) Aktivkohle mit Mikroporen eines Durchmessers von im wesentlichen 1 - 2 nm (10 - 20 Å), vorzugsweise 1,5 - 2 nm (15 - 20 Å). Derartige großporige Aktivkohlen sind z.B. für die Wasserreinigung im Handel. Sie haben in der Regel eine innere Oberfläche von etwa 800 - 1200 m²/g.
b) Polymere Adsorber - auch als organische Molekularsiebe bezeichnet - bei denen es sich um poröse organische Polymere auf der Basis von Styrol und Divinylbenzol mit Porendurchmessern von im wesentlichen 0,8 - 8 nm (8 - 80 Å) handelt. Derartige Adsorber haben innere Oberflächen von 600 - 1600 m²/g. Sie sind beispielsweise als BONOPORE® im Handel.
c) Hydrophobe Molekularsiebe mit einem Porendurchmesser im wesentlichen im Bereich von 0,8 - 1,8 nm (8 - 18 Å). Diese haben den gleichen kristallinen Aufbau wie normale zeolithische Molekularsiebe, adsorbieren jedoch organische Moleküle und kaum Wasserdampf. Die Wasseraufnahme ist auch bei relativ hohen Feuchten extrem niedrig. Solche Zeolithe werden z.B. von Munters Zeol AB unter der Bezeichnung "Hydrophobic zeolites" verkauft. Ähnliche hydrophobe Zeolithe gibt es auch von der DEGUSSA AG unter der Bezeichnung DAY-ZEOLITHE. Die Bezeichnung ist von dealuminisierten Y-Zeolithen abgeleitet.

Einer derartigen großporigen Filterschicht (Vorfilter) ist zweckmäßig in Strömungsrichtung der austretenden Kohlenwasserstoffe mindestens eine Filterschicht mit kleineren Mikroporen aus einem der folgenden Materialien nachgeordnet:
a) Aktivkohle mit einem Mikroporendurchmesser von im wesentlichen 0,8 ± 0,2 nm (8 ± 2 Å).
b) Polymere Adsorber mit Mikroporen eines Durchmessers im Bereich von 0,4 - 0,8 nm (4 - 8 Å), wie sie beispielsweise unter der Bezeichnung SORBATHENE® im Handel sind. Diese haben innere Oberflächen von etwa 1400 - 1600 m²/g.
c) Hydrophobe Molekularsiebe einer Porengröße von 0,2 - 0,9 nm (2 - 9 Å), für die, abgesehen von der Porengröße, das gleiche gilt, was oben für die hydrophoben Molekularsiebe des Vorfilters Filterschicht gesagt wurde.

Als Aktivkohlekügelchen werden solche bevorzugt, die als Ausgangsmaterial Steinkohlenteerpech, Petroleumpech oder Bitumen haben. Hierbei werden die Pechkügelchen durch Oxydation unschmelzbar gemacht und anschliessend carbonisiert und aktiviert. Je nach Aktivierungsgrad werden innere Oberflächen von 600 - 1600 m²/g erreicht.

Ein anderes geeignetes Ausgangsmaterial sind Kügelchen aus Copolymerisaten von Styrol und Divinylbenzol. Die hieraus durch Pyrolyse mit oder ohne zusätzlicher Aktivierung erhaltenen Aktivkohlekügelchen zeichnen sich durch eine harte Schale und zahlreiche Mikroporen im Bereich von 0,5 - 1 nm (5 - 10 Å) und gute Transportporen aus. Diese Mikroporen nehmen beispielsweise bis zum 0,5 ml pro g der Aktivkohle ein.

Statt der beschriebenen Aktivkohlekügelchen können auch etwa kugelförmige, durch ein Pelletierverfahren erhaltene Agglomerate aus vermahlener Aktivkohle und einem geeigneten Binder verwendet werden, wie sie z.B. in der DE-A-35 10 209 beschrieben sind. Dieses Verfahren hat den Vorteil, daß verschiedene Typen Aktivkohle bzw. unterschiedliche Adsorbentien eingesetzt werden können, so daß bestimmte adsorptive Eigenschaften gezielt gefördert werden können.

Für die Zwecke der Erfindung werden Haftmassen, Binder oder Binderdispersionen zur Fixierung der Adsorberkörner an dem Trägermaterial bevorzugt, die beim Erwärmen aushärten.
Bevorzugt werden Haftmassen, die aus vernetzbaren Polymeren bestehen, die vor ihrer Vernetzung ein Viskositätsminimum durchlaufen. Derartige Haftsysteme wie z.B. die IMPRANIL® -High-Solid-PUR-Reaktivprodukte von BAYER® sind zunächst hoch viskos, d.h. sie bieten eine gute Anfangshaftung, wenn das Trägerskelett mit den Adsorberteilchen bestreut wird. Mit der Temperaturerhöhung Zeigen sie einen starken Viskositätsabfall, der eine bessere Benetzung der Adsorberteilchen und damit nach dem Aushärten durch Vernetzung eine besonders gute Haftung zur Folge hat. Während das Viskositätsminimum durchlaufen wird, bilden sich an den Kontaktstellen zwischen Trägergerüst und Adsorberteilchen infolge der Kapillarkräfte kleine Einschnürungen. Wegen der praktisch punktförmigen Fixierung der Adsorberkügelchen ist nach dem Aushärten fast deren gesamte Oberfläche dem zu reinigenden Gas zugänglich.

Die Binder oder Haftsysteme müssen gegen die Kohlenwasserstoffe beständig sein, d.h. sie dürfen in Berührung mit den flüssigen Kohlenwasserstoffen oder ihren Dämpfen nicht angelöst werden oder aufquellen.

Die genannten Adsorber, Träger und Kleber sind Beispiele, die andere Systeme mit grundsätzlich gleicher Funktion nicht ausschließen. Je nach Gestaltung des Filtergehäuses können auch mehr als zwei Filtersektionen mit Adsorbern, deren Mikroporendurchmesser stufenweise abnehmen, vorhanden sein. Die Dämpfe kontaktieren immer zuerst die Filterschicht mit den größten Mikroporen und verlassen das Filter über die Filterschicht mit den kleinsten Mikroporen, während die Desorption mittels Frischluft in umgekehrter Richtung verläuft.

## Patentansprüche

1. Adsorptionsfilter zur Vermeidung der Kohlenwasserstoffemissionen der Tanks von Kraftfahrzeugen beim Betanken und durch Atmung, gekennzeichnet durch ein hochluftdurchlässiges, im wesentlichen formstabiles, dreidimensionales, aus Drähten, Monofilamenten oder Stegen aufgebautes Tragergerüst, an dem eine Schicht von körnigen, insbesondere kugelförmigen, Adsorberteilchen eines Durchmessers von 0,1 - 1 mm fixiert ist, wobei die Größe der Mikroporen des Adsorbens in Strömungsrichtung der austretenden Kohlenwasserstoffe abnimmt.

2. Filter nach Anspruch 1, dadurch gekennzeichnet, daß die Größe der Mikroporen des Adsorbens stufenweise abnimmt.

3. Filter nach Anspruch 1 oder 2, dadurch gekennzeichnet, daß das Trägergerüst ein großporiger retikulierter PUR-Schaum ist.

4. Filter nach Anspruch 3, dadurch gekennzeichnet, daß der großporige retikulierte PUR-Schaum ein Litergewicht von 20 - 60 g und Poren von 1,5 - 3 mm Durchmesser hat.

5. Filter nach einem der Ansprüche 1 bis 4, dadurch gekennzeichnet, daß die großporige Filterschicht, die von den austretenden Kohlenwasserstoffen zuerst durchströmt wird, Adsorberteilchen aus einem der folgenden Materialien enthält:
a) Aktivkohle mit einem Porendurchmesser von im wesentlichen 1 - 2 nm (10 - 20 Å), vorzugsweise 1,5 - 2 nm (15 -20 Å)
b) poröse organische Polymere mit Porendurchmessern von 0,8 - 8 nm (8 - 80 Å)
c) hydrophobe Molekularsiebe mit einem Porendurchmesser von 0,8 - 1,8 nm (8 - 18 Å).

6. Filter nach einem der Ansprüche 1 bis 5, dadurch gekennzeichnet, daß der großporigen Filterschicht (Vorfilter) in Strömungsrichtung der austretenden Kohlenwasserstoffe eine feinporige Filterschicht aus einer der folgenden Materialien nachgeordnet ist:
a) Aktivkohle mit Mikroporen eines Durchmessers von im wesentlichen 0,6 - 1 nm (6 - 10 Å)
b) polymere Adsorber mit einem Porendurchmesser von im wesentlichen 0,4 - 0,8 nm (4 - 8 Å)
c) hydrophobe Molekularsiebe einer Porengröße von 0,2 - 0,9 nm (2 - 9 Å).

7. Filter nach einem der Ansprüche 1 bis 6, dadurch gekennzeichnet, daß zur Fixierung der Adsorberteilchen ein Klebersystem dient, das vor dem Anshärten ein Viskositätsminimum durchläuft.

8. Filter nach einem der Ansprüche 1 bis 7, dadurch gekennzeichnet, daß das Klebersystem aus einem bis zu 20 % Lösemittel enthaltenden PUR-Prepolymeren mit blockierten NCO-Gruppen und einem Vernetzer besteht.

9. Verfahren zur Verminderung der Kohlenwasserstoffemissionen der Tanks von Kraftfahrzeugen, bei dem die durch Atmung des Tanks entweichenden Benzindämpfe durch ein Adsorptionsfilter geleitet und die adsorbierten Kohlenwasserstoffe in umgekehrter Richtung durch vom Motor angesaugte Frischluft desorbiert und im Motor verbrannt werden, dadurch gekennzeichnet, daß auch die von, eingefüllten Kraftstoff verdrängten Benzindämpfe durch das Adsorptionsfilter aus einem hochluftdurchlässigen, im wesentlichen formstabilen, dreidimensionalen aus Drähten, Monofilamenten oder Stegen aufgebauten Trägergerüst, an dem eine Schicht von körnigen, insbesondere kugelförmigen, Teilchen eines Durchmessers von 0,1 - 1 mm aus einem Adsorbens mit einem mittleren Durchmesser der Mikroporen von 0,3 - 1,8 nm (3 - 18 Å) fixiert ist, geleitet werden.

10. Verfahren nach Anspruch 9, dadurch gekennzeichnet, daß das Trägergerüst ein großporiger retikulierter PUR-Schaum ist.

11. Verfahren zur Verminderung der Kohlenwasserstoffemissionen der Tanks von Kraftfahrzeugen, bei dem die durch Atmung des Tanks entweichenden Benzindämpfe durch ein Adsorptionsfilter geleitet und die adsorbierten Kohlenwasserstoffe in umgekehrter Richtung durch vom Motor angesaugte Frischluft desorbiert und im Motor verbrannt werden, dadurch gekennzeichnet, daß auch die vom eingefüllten Kraftstoff verdrängten Benzindämpfe durch das Adsorptionsfilter nach einem der Ansprüche 1 bis 8 geleitet werden.

12. Verwendung eines hochluftdurchlässigen Adsorptionsfilters aus einem hochluftdurchlässigen, im wesentlichen formstabilen, dreidimensionalen, aus Drähten, Monofilamenten oder Stegen aufgebauten Tragergerüst, an dem eine Schicht von körnigen, insbesondere kugelförmigen, Teilchen eines Durchmessers von 0,1 - 1 mm aus einem Adsorbens mit einem mittleren Durchmesser der Mikroporen von 0,3 - 1,8 nm (3 - 18 Å) fixiert ist, zur Vermeidung der Kohlenwasserstoffemissionen der Tanks von Kraftfahrzeugen beim Betanken.

13. Verwendung eines Filters nach Anspruch 12, bei dem das Trägergerüst ein großporiger retikulierter PUR-Schaum ist.

14. Verwendung eines Filters nach den Ansprüchen 1 bis 8 zur Vermeidung der Kohlenwasserstoffemissionen der Tanks von Kraftfahrzeugen beim Betanken.

## Claims

1. An adsorption filter for preventing hydrocarbon emissions from the tanks of motor vehicles upon refuelling and by breathing, characterised by a highly air-permeable, substantially dimensionally stable, three-dimensional supporting frame made of wires, monofilaments or webs, on which a layer of granular, in particular spherical, adsorber particles having a diameter of 0.1 - 1 mm is fixed, the size of the micropores of the adsorbent decreasing in the direction of flow of the emerging hydrocarbons.

2. A filter according to Claim 1, characterised in that the size of the micropores of the adsorbent decreases in steps.

3. A filter according to Claim 1 or 2, characterised in that the supporting frame is a large-pored reticulated polyurethane foam.

4. A filter according to Claim 3, characterised in that the large-pored reticulated polyurethane foam has a weight per litre of 20 - 60 g and pores of a diameter of 1.5 - 3 mm.

5. A filter according to one of Claims 1 to 4, characterised in that the large-pored filter layer through which the emerging hydrocarbons initially flow contains adsorber particles consisting of one of the following materials:
a) activated carbon having a pore diameter of essentially 1 - 2 nm (10 - 20 Å), preferably 1.5 - 2 nm (15 - 20 Å),
b) porous organic polymers having pore diameters of 0.8 - 8 nm (8 - 80 Å),
c) hydrophobic molecular sieves having a pore diameter of 0.8 - 1.8 nm (8 - 18 Å).

6. A filter according to one of Claims 1 to 5, characterised in that the large-pored filter layer (prefilter) is succeeded in the direction of flow of the emerging hydrocarbons by a fine-pored filter layer consisting of one of the following materials:
a) activated carbon having micropores of a diameter of essentially 0.6 - 1 nm (6 - 10 Å),
b) polymeric adsorbers having a pore diameter of essentially 0.4 - 0.8 nm (4 - 8 Å),
c) hydrophobic molecular sieves having a pore size of 0.2 - 0.9 nm (2 - 9 Å).

7. A filter according to one of Claims 1 to 6, characterised in that an adhesive system which passes through a minimum viscosity before hardening serves to fix the adsorber particles.

8. A filter according to one of Claims 1 to 7, characterised in that the adhesive system consists of a polyurethane prepolymer, containing up to 20% solvent, with blocked NCO groups and a cross-linking agent.

9. A method for reducing the hydrocarbon emissions from the tanks of motor vehicles, in which the petrol vapours which escape by breathing of the tank are passed through an adsorption filter and the adsorbed hydrocarbons are desorbed in the opposite direction by fresh air drawn in by the engine and are burned in the engine, characterised in that the petrol vapours displaced by the fuel poured in are also passed through the adsorption filter consisting of a highly air-permeable, substantially dimensionally stable, three-dimensional supporting frame made of wires, monofilaments or webs, on which a layer of granular, in particular spherical, particles having a diameter of 0.1 - 1 mm consisting of an adsorber with an average diameter of the micropores of 0.3 to 1.8 nm (3 - 18 Å) is fixed.

10. A method according to Claim 9, characterised in that the supporting structure is a large-pored reticulated polyurethane foam.

11. A method for reducing the hydrocarbon emissions from the tanks of motor vehicles, in which the petrol vapours which escape by breathing of the tank are passed through an adsorption filter and the adsorbed hydrocarbons are desorbed in the opposite direction by fresh air drawn in by the engine and are burned in the engine, characterised in that the petrol vapours displaced by the fuel poured in are also passed through the adsorption filter according to one of Claims 1 to 8.

12. The use of a highly air-permeable adsorption filter consisting of a highly air-permeable, substantially dimensionally stable, three-dimensional supporting frame made of wires, monofilaments or webs, on which a layer of granular, in particular spherical, particles having a diameter of 0.1 - 1 mm consisting of an adsorber with an average diameter of the micropores of 0.3 - 1.8 nm (3 - 18 Å) is fixed, for preventing the hydrocarbon emissions from the tanks of motor vehicles upon refuelling.

13. The use of a filter according to Claim 12, in which the supporting frame is a large-pored reticulated polyurethane foam.

14. The use of a filter according to Claims 1 to 8 for preventing the hydrocarbon emissions from the tanks of motor vehicles upon refuelling.

## Revendications

1. Filtre adsorbant permettant d'éviter les émissions d'hydrocarbures des réservoirs de véhicules automobiles au moment de l'approvisionnement en carburant et par respiration, caractérisé par une ossature de support tridimensionnelle, sensiblement indéformable, de grande perméabilité à l'air, réalisée en fils métalliques, en monofilaments ou en ailettes, à laquelle est fixée une couche de particules granulaires, notamment sphériques, de matière adsorbante de 0,1 à 1 mm de diamètre, la grandeur des pores microscopiques de la matière adsorbante diminuant dans la direction d'écoulement des hydrocarbures sortants.

2. Filtre suivant la revendication 1, caractérisé en ce que la grandeur des pores microscopiques de la matière adsorbante décroît par paliers.

3. Filtre suivant la revendication 1 ou 2, caractérisé en ce que l'ossature de support est une mousse de polyuréthanne réticulée à pores grossiers.

4. Filtre suivant la revendication 3, caractérisé en ce que la mousse de polyuréthanne réticulée à pores grossiers a un poids au litre de 20 à 60 g et un diamètre de pores de 1,5 à 3 mm.

5. Filtre suivant l'une des revendications 1 à 4, caractérisé en ce que la couche filtrante à pores grossiers, qui est traversée en premier lieu par le courant d'hydrocarbures sortants, contient des particules de matière adsorbante de l'une des matières suivantes :
a) charbon actif ayant un diamètre de pores principalement compris entre 1 et 2 nm (10 - 20 Å), de préférence entre 1,5 et 2 nm (15 - 20 Å)
b) polymères organiques poreux ayant des diamètres de pores de 0,8 à 8 nm (8 à 80 Å)
c) tamis moléculaire hydrophobe ayant un diamètre de pores de 0,8 à 1,8 nm (8 - 18 Å).

6. Filtre suivant l'une des revendications 1 à 5, caractérisé en ce que la couche filtrante à pores grossiers (préfiltre) est suivie, dans la direction d'écoulement des hydrocarbures sortants, d'une couche filtrante à fine porosité de l'une des matières suivantes :
a) charbon actif à pores microscopiques de diamètre allant principalement de 0,6 à 1 nm (6 - 10 Å)
b) matières adsorbantes polymères ayant un diamètre de pores principalement de 0,4 à 0,8 nm (4 - 8 Å)
c) tamis moléculaire hydrophobe ayant une grandeur de pores de 0,2 - 0,9 nm (2 - 9 Å).

7. Filtre suivant l'une des revendications 1 à 6, caractérisé en ce qu'on utilise pour la fixation des particules de matières adsorbantes un système d'adhésif dont la viscosité passe par un minimum avant le durcissement.

8. Filtre suivant l'une des revendications 1 à 7, caractérisé en ce que le système d'adhésif est constitué d'un prépolymère de polyuréthanne contenant jusqu'à 20 % de solvant portant des groupes NCO protégés, et d'un agent de réticulation.

9. Procédé pour réduire les émissions d'hydrocarbures des réservoirs de véhicules automobiles, dans lequel les vapeurs d'essence qui s'échappent par respiration du réservoir sont amenées à passer à travers un filtre adsorbant et les hydrocarbures adsorbés sont désorbés dans la direction opposée par de l'air frais aspiré par le moteur et sont brûlés dans le moteur, caractérisé en ce que les vapeurs d'essence refoulées par le carburant chargé sont amenées à passer elles aussi à travers le filtre de matière adsorbante formé d'une ossature de support tridimensionnelle, principalement indéformable, de grande perméabilité à l'air, formée de fils métalliques, de monofilaments ou d'ailettes, à laquelle est fixée une couche de particules granulaires, notamment sphériques, d'un diamètre de 0,1 à 1 mm, d'une matière adsorbante dont les pores microscopiques ont un diamètre moyen de 0,3 à 1,8 nm (3 - 18 Å).

10. Procédé suivant la revendication 9, caractérisé en ce que l'ossature de support est une mousse de polyuréthanne réticulée à pores grossiers.

11. Procédé pour éviter des émissions d'hydrocarbures des réservoirs de véhicules automobiles, dans lequel les vapeurs d'essence s'échappant par respiration du réservoir sont amenées à traverser un filtre adsorbant et les hydrocarbures adsorbés sont désorbés dans la direction opposée par de l'air frais aspiré par le moteur et sont brûlés dans le moteur, caractérisé en ce que les vapeurs d'essence refoulées par le carburant chargé sont amenées à passer à travers le filtre de matière adsorbante suivant l'une des revendications 1 à 8.

12. Utilisation d'un filtre adsorbant très perméable à l'air constitué d'une ossature de support tridimensionnelle principalement indéformable, de grande perméabilité à l'air, constituée de fils métalliques, de monofilaments ou d'ailettes, sur laquelle est fixée une couche de particules granulaires, notamment sphériques, d'un diamètre de 0,1 à 1 mm, d'une matière adsorbante ayant un diamètre moyen de pores microscopiques de 0,3 à 1,8 nm (3 à 18 Å), pour éviter des émissions d'hydrocarbures des réservoirs de véhicules automobiles au moment de leur approvisionnement en carburant.

13. Utilisation d'un filtre suivant la revendication 12, dans laquelle l'ossature de support est une mousse de polyuréthanne réticulée à pores grossiers.

14. Utilisation d'un filtre suivant les revendications 1 à 8 pour éviter des émissions d'hydrocarbures des réservoirs de véhicules automobiles lors de l'approvisionnement en carburant.
